Europäisches Patentamt

European Patent Office

Office européen des brevets

(11) Numéro de publication : **0 277 860 B1**

# (12) FASCICULE DE BREVET EUROPEEN

(45) Date de publication du fascicule du brevet :
**01.04.92 Bulletin 92/14**

(51) Int. Cl.$^5$ : **G21C 3/34**

(21) Numéro de dépôt : **88400093.6**

(22) Date de dépôt : **18.01.88**

(54) **Grille d'assemblage combustible de réacteur à eau légère.**

(30) Priorité : **21.01.87 FR 8700660**

(43) Date de publication de la demande :
**10.08.88 Bulletin 88/32**

(45) Mention de la délivrance du brevet :
**01.04.92 Bulletin 92/14**

(84) Etats contractants désignés :
**BE CH DE ES FR GB IT LI SE**

(56) Documents cités :
**EP-A- 0 192 534**
**BE-A- 657 221**
**CH-A- 483 695**
**FR-A- 1 366 575**
**FR-A- 1 570 013**
**FR-A- 2 241 125**

(73) Titulaire : **COMMISSARIAT A L'ENERGIE
ATOMIQUE Etablissement de Caractère
Scientifique Technique et Industriel
31/33, rue de la Fédération
F-75015 Paris (FR)**

(72) Inventeur : **Razafindrazaka, Lioka
7, Square Pascal
F-78181 Montigny Le Bretonneux (FR)**

(74) Mandataire : **Mongrédien, André et al
c/o BREVATOME 25, rue de Ponthieu
F-75008 Paris (FR)**

Jouve, 18, rue Saint-Denis, 75001 PARIS

**Description**

La présente invention concerne une grille d'assemblage combustible pour le maintien en place de crayons combustibles de réacteurs à eau légère.

Dans des exemples connus, les grilles assurant le maintien latéral et axial des crayons combustibles sont généralement constituées par des plaquettes assemblées suivant un réseau défini. Cet assemblage de plaquettes soudées à leurs intersections délimite des cellules à l'intérieur desquelles passe un crayon combustible ou un tube guide. Les plaquettes comportent des ressorts et des bossettes qui assurent le maintien latéral et axial des crayons combustibles. Le brevet européen EP 0033 263 présente une grille de ce type.

La présente invention décrit des cellules formées de tronçons de cylindre de section polygonale, préalablenent échancrés ou évidés sur une partie de leur hauteur, et que l'on imbrique de façon à ce que leurs sections se recouvrent partiellement : le maintien des trayons dans les cellules est ainsi assuré par les portions des tronçons de cylindre voisins pénétrant dans la cellule considérée. L'assemblage des différents tronçons, notamment par soudage, permet d'obtenir des assemblages trés rigides.

Les portions pénétrantes sont saillantes et terminées en méplats servant d'appui aux crayons. La forme générale des sections des tronçons de cylindre, à l'exception des méplats, est carrée dans un réseau carré ou triangulaire dans un réseau hexagonal. Le polygone a de toute façon un nombre fini de côtés. Les évidements et les échancrures s'étendent sur toute la largeur comprise entre les deux côtés consécutifs qui constituent chaque portion pénétrante.

La grille selon l'invention présente de nombreux avantages par rapport à celle du brevet européen. Elle est réalisée préférentiellement en un matériau tel que le Zircaloy intéressant pour ses propriétés de faible capture neutronique en dépit de ses caractéristiques mécaniques médiocres. Sa rigidité, notamment vis-à-vis du flambement, est assurée pour l'essentiel par les faibles longueurs libres des côtés des figures géométriques résultant de l'imbrication des cellules ; on peut donc choisir une épaisseur de métal faible pour la fabrication des cellules, ce qui contribue à diminuer ta résistance hydraulique de la grille. Un autre avantage de l'invention est de présenter un assemblage de cellules élémentaires simples ne comportant que peu de variantes, contrairement à celui du brevet européen où les plaquettes présentent de nombreuses variantes. La fabrication de la grille selon l'invention s'en trouve simplifiée et son coût réduit.

On connaît également une solution (CH-A- 483 695) d'après laquelle les crayons sont maintenus entre la surface extérieure de bagues circulaires imbriquées, certains des crayons étant en outre entourés d'une autre bague. Cette solution a été prévue 'pour un réacteur refroidi par gaz, où les crayons sont courts et appuyés par les bagues à leurs bouchons d'extrémité.

D'autres avantages de l'invention peuvent cependant être dégagés vis-à-vis de ce brevet. C'est ainsi que la largeur des méplats peut être choisie en fonction du pas d'espacement des crayons pour éviter que les tronçons ne se trouvent trop pris des trayons, te qui diminuerait l'efficacité du refroidissement en amenant la création de points chauds, ou au contraire trop éloignés des crayons qu'ils entourent, te qui conduirait à un mauvais guidage du fluide de refroidissement le long des crayons.

La présente de méplats permet d'appuyer commodément les crayons car, même en tas d'excentrement des tronçons, les trayons s'appuient toujours sur une ligne de la surface des méplats et restent ainsi correctement maintenus en place.

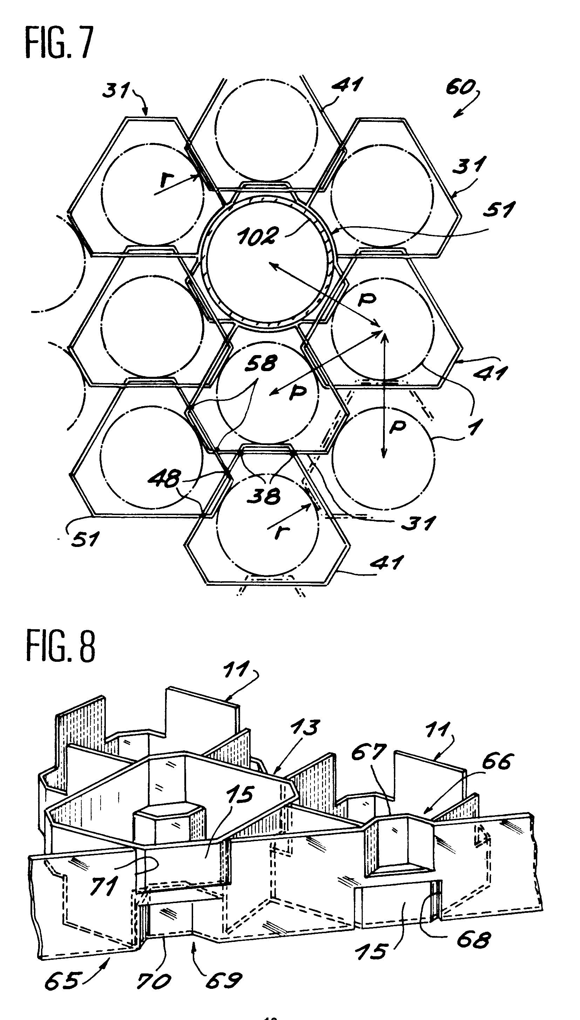

Le choix de polygones simples permet enfin de limiter le nombre d'appuis qui, notamment pour la construction représentée figure 7, sont au nombre de ,trois pour chaque crayon. On réduit ainsi l'hyperstaticité totale, ce qui est tris avantageux dans le tas de crayons de plusieurs mètres de longueur.

On va maintenant décrire plus concrètement l'invention à l'aide des dessins annexés dont l'énumération suit et qui sont donnés à titre illustratif et nullement limitatif :

    – la figure 1 représente en perspective un agencement possible des crayons de combustible nucléaire à l'aide de grilles,

    – la figure 2 représente un tronçon de cylindre utilisable pour une réalisation de grille conforme à l'invention,

    – la figure 3 représente une vue de face d'une grille construite à l'aide des tronçons de cylindre de la figure 2,

    – les figures 4, 5 et 6 représentent trois tronçons de cylindre utilisables en combinaison pour une autre réalisation de grille conforme à l'invention,

    – la figure 7 représente une vue de face d'une grille construite à l'aide des éléments des figures 4 à 6,

    – la figure 8 représente en perspective un élément de bordure que l'on peut utiliser pour les grilles selon l'invention,

    – la figure 9 représente un détail de conception que l'on peut appliquer aux tronçons de cylindre d'après l'invention, et

    – la figure 10 représente une variante comportant deux grilles superposées, espacées et enserrées par une bordure.

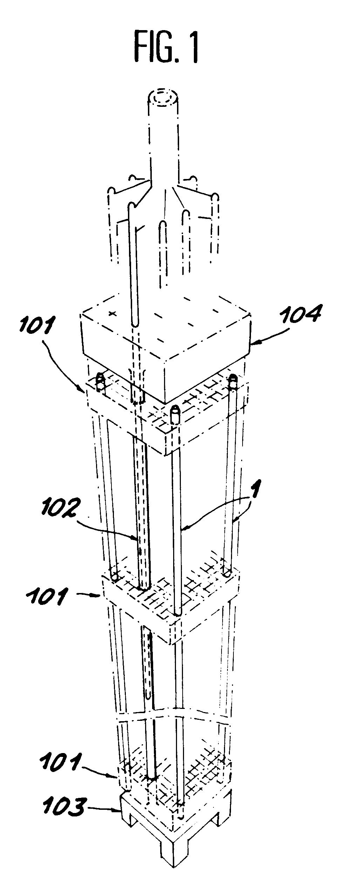

La figure 1 représente schématiquement comment on agence des grilles 101, ici au nombre de trois, de façon à maintenir en place un faisceau de crayons 1 de combustible nucléaire, dont seuls quelques-uns sont représentés ici. Les crayons 1, qui ont une longueur de l'ordre de quatre mètres, ont une de leurs extrémités fixée à la pièce d'extrémité 103 ou 104. Des tubes guides 102 relient entre elles les pièces d'extrémité 103 et 104

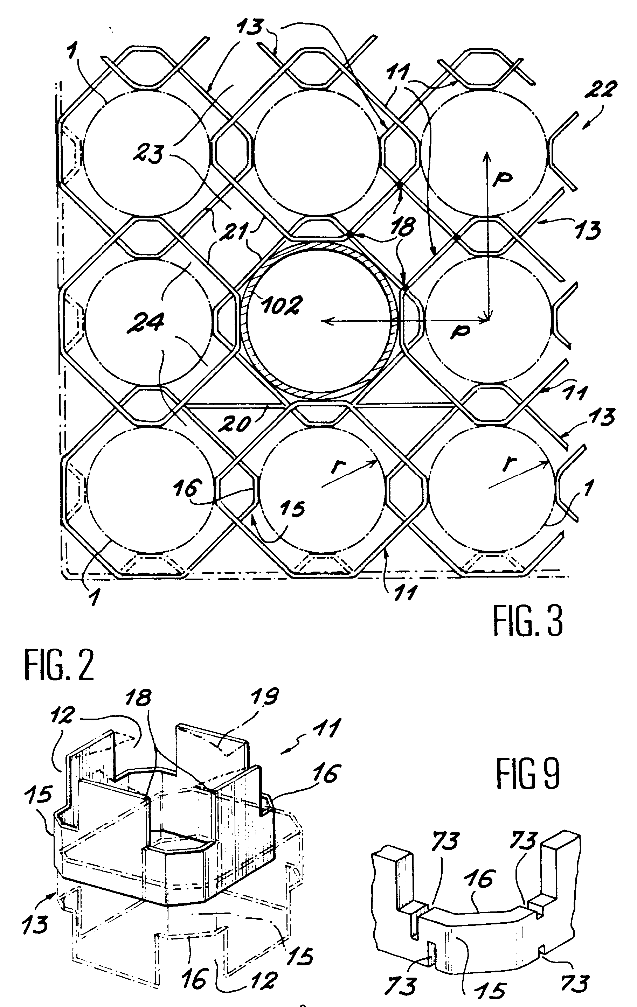

A présent, on s'intéresse plus particulièrement aux grilles selon l'invention. Dans un premier mode de réalisation préféré, elles peuvent être construites par assemblage de tronçons de cylindre à section à peu près carrée et portant les références 11 et 13 sur la figure 2. Préférentiellement, sur la moitié de leur hauteur, ces tronçons de cylindre 11 et 13 portent des échancrures 12 localisées en leurs angles 15.

L'assemblage des tronçons se fait en les imbriquant de telle façon que leurs échancrures soient alternativement en partie haute (tronçons 11) ou en partie basse (tronçons 13) ; puis on introduit un angle 15 du tronçon 13 dans une échancrure 12 du tronçon 11 adjacent. L'assemblage définitif se fait par soudage aux intersections 18.

Les angles 15 présentent des méplats 16 qui servent d'appui aux crayons 1, comme on le voit sur la grille 22 dessinée sur la figure 3. Chaque crayon 1 est entouré par les quatre côtés 21 d'un tronçon 11 ou 13 et soutenu par quatre autres tronçons 11 et 13.

D'après cette figure, on constate que les tronçons 11 et 13 sont disposés suivant deux quinconces superposés et décalés. Les crayons 1 sont en appui sur les méplats 16.

On a considéré jusqu'ici que les tronçons 11 ou 13 étaient tous semblables. Si l'assemblage comporte des tubes guides 102, les tronçons au voisinage de ces derniers auront une forme adaptée. La rigidité de cette grille est augmentée en ajoutant des nervures 20 sur une diagonale d'un carré 23 formé par quatre côtés 21 appartenant à quatre tronçons 11 et 13 adjacents.

En faisant varier la largeur des méplats 16, on peut faire varier les aires du carré 23 et du rectangle curviligne 24 délimité principalement par un côté 21 et un crayon 1, c'est-à-dire adapter les caractéristiques de l'écoulement du fluide de refroidissement des crayons 1 en ajustant les pertes de charge dues au passage de la grille 22 et en canalisant le fluide le long des crayons 1.

Les méplats 16 eux-mêmes permettent tout d'abord, pour certaines valeurs du pas p d'espacement des crayons 1 et de leur rayon r, de dégager les côtés 21 du crayon 1 qu'ils entourent. Ils permettent ensuite un montage facilité des crayons 1 dans la grille 22 car ils garantissent un appui stable, sur un plan, même si le tronçon 11 ou 13 dont ils font partie est dévié de côté ou monté tordu après une fabrication incorrecte.

Les tronçons de cylindre 11 et 13 peuvent être produits par tout moyen adapté, en particulier par formage de tronçons de section primitivement cylindrique suivi du découpage des échancrures 12, le soudage de panneaux élémentaires ou encore le filage direct. Les tronçons 11 et 13 peuvent être identiques, les tronçons 13 étant simplement retournés. On peut cependant profiler l'extrémité des côtés 21 de certains tronçons 11, entre les échancrures 12, en ailettes 19 pour favoriser le brassage du fluide de refroidissement. Les ailettes 19 sont ici représentées incurvées vers l'intérieur du tronçon 11 et pourvues d'une largeur variable.

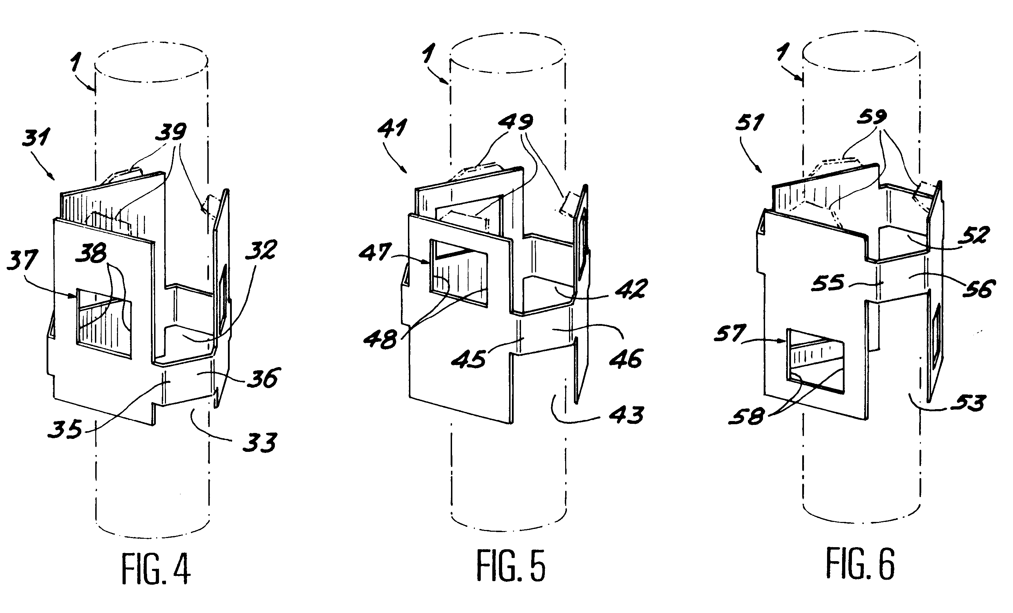

Comme les pièces mécaniques représentées figures 4, 5 et 6 présentent des caractères semblables dans une large mesure, leur description va être faite simultanément.

Dans cette réalisation particulière de l'invention, les tronçons 31, 41 et 51 destinés à former une grille ont une section à peu près triangulaire avec des angles cassés en méplats 36, 46 et 56 respectivement. La hauteur des angles 35, 45, 55 est diminuée par des échancrures partant des deux extrémités des tronçons 31, 41 et 51 : il existe des échancrures supérieures 32, 42 et 52 et des échancrures inférieures 33, 43 et 53 qui se font face respectivement sur les tronçons 31, 41 et 51. Dans la figure 4, les échancrures supérieures 32 sont profondes et les échancrures inférieures 33 superficielles, alors que la situation est inverse pour les échancrures 52 et 53 de la figure 6 et que les échancrures 42 et 43 de la figure 5 ont une profondeur à peu près égale. Il en résulte que, sur ces figures, les angles 35 sont en bas des tronçons 31, les angles 45 sont au milieu des tronçons 41 et les angles 55 sont au sommet des tronçons 51.

Les tronçons 31, 41 et 51 sont encore munis respectivement d'évidements rectangulaires 37, 47 et 57 disposés également à des hauteurs différentes. Les évidements 37 des tronçons 31 sont placés à la même hauteur que les angles 45 des tronçons 41 ; les évidements 47 des tronçons 41 sont placés à la même hauteur que les angles 55 des tronçons 51 ; les évidements 57 des tronçons 51 sont placés à la même hauteur que les angles 35 des tronçons 31. De plus, la taille des évidements est suffisamment importante pour que les angles des autres tronçons placés à leur hauteur puissent y pénétrer partiellement. La grille est réalisée par soudage des intersections 38, 48, 58 des différents tronçons.

Ici encore, les tronçons 31, 41, 51 peuvent avoir l'extrémité de leurs côtés, entre les échancrures supérieures 32, 42, 52, profilée en ailettes de brassage du fluide 39, 49, 59.

Une telle grille 60 est représentée figure 7. De façon analogue à la grille 22 de la figure 3, les différents tronçons 31, 41 et 51 forment des réseaux réguliers et imbriqués. Chaque tronçon d'une espèce, à condition qu'il ne soit pas placé au bord de la grille 60, est entouré de trois tronçons de chacune des deux autres espèces placés alternativement avec un décalage angulaire de 60°. Comme sur la figure 3, les méplats 36, 46 et 56 servent d'appui aux crayons 1 ;

de même, il est possible de prévoir des tronçons comportant des formes légèrement différentes pour pouvoir s'adapter à des tubes guides 102 de diamètre différent de ceux des crayons 1.

La principale différence avec la figure 3 est que les crayons 1 sont disposés suivant un réseau hexagonal et non carré et que, si chaque crayon 1 reste entouré d'un seul tronçon 31, 41 ou 51, il n'est plus soutenu que par trois autres tronçons, ce qui diminue l'hyperstaticité de leur montage.

Les avantages de cette solution par rapport aux conceptions de l'art antérieur, notamment en ce qui concerne la résistance d'ensemble, la faculté de régler l'écoulement du fluide réfrigérant, et l'intérêt des méplats 36, 46 et 56, sont analogues à ceux énumérés dans le commentaire de la figure 3.

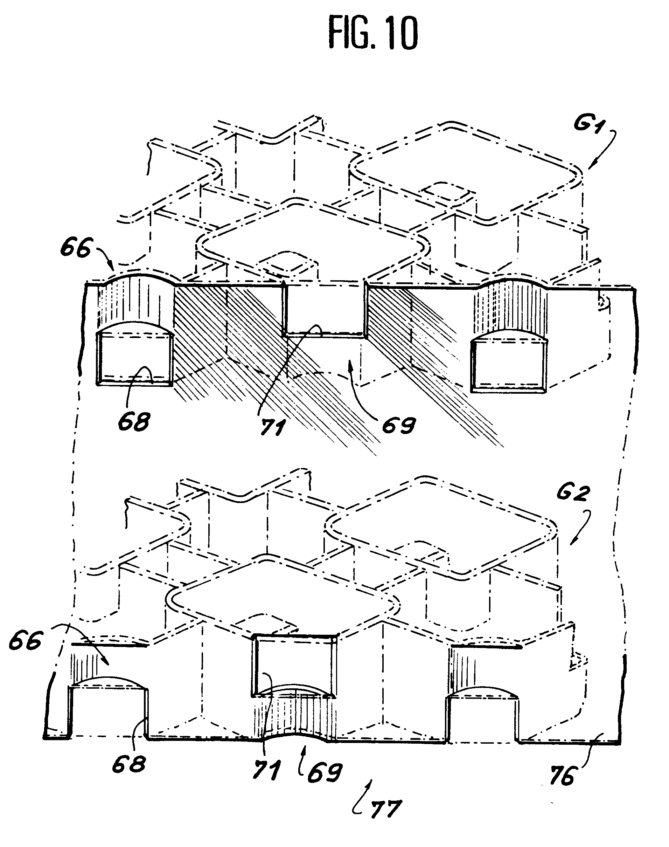

Sur leur périphérie les grilles 22 et 60 présentent une bordure 65 (figure 8) entourant les cellules et qui possède des échancrures inférieures 68 et supérieures 71, ainsi que des bossettes supérieures 66 présentant des méplats 67 et des bossettes inférieures 69 présentant des méplats 70 dans le cas des tronçons 11 et 13 à section carrée. Pour d'autres sections de tronçons, les aménagements à apporter peuvent être déduits facilement. Les échancrures inférieures 68 alternent avec les bossettes inférieures 69 ; de même, les échancrures supérieures 71 alternent avec les bossettes supérieures 66. Au-dessus des échancrures inférieures 68 et en ces endroits seulement se trouvent les bossettes supérieures 66. Au-dessus des bossettes inférieures 69 et en ces endroits seulement se trouvent les échancrures supérieures 71.

Le contact entre la bordure 65 et les tronçons 11 s'établit à l'emplacement des échancrures inférieures 68 et des bossettes supérieures 66 ; le contact entre les tronçons 13 et la bordure 65 s'établit à l'endroit des échancrures supérieures 71 et des bossettes inférieures 69. On assemble la bordure 65 et les tronçons 11 et 13 par soudage de telle manière que les bossettes 66 et 69 pénètrent dans les tronçons 11 et 13 respectivement et peuvent ainsi servir d'appuis aux crayons 1 situés dans ces tronçons 11 et 13 adjacents à la bordure 65.

Avec cette conception aucun tronçon ne reste inoccupé. Il est encore possible, comme on le représente sur la figure 8, de déformer les angles 15 qui s'adaptent dans les échancrures 68 et 71 de façon à ce qu'après assemblage ils soient en prolongement de la bordure 65.

Les grilles selon l'invention n'assurent pas la fonction de maintien axial des crayons combustibles. Celle-ci peut être assurée au niveau de la pièce d'extrémité inférieure ou supérieure de l'assemblage au moyen d'un système me de fixation connu, par exemple celui décrit dans le brevet français FR-A-2 577 343.

Il est possible d'assurer non seulement un appui pour les crayons 1 mais encore un véritable serrage.

Pour cela, il faut augmenter l'élasticité des angles 15, 35, 45 ou 55 en contact avec les crayons 1 tout en les dimensionnant de telle manière que la distance entre ces angles dans la grille 22 ou 60 soit légèrement inférieure au diamètre des crayons 1. On obtient donc un assemblage à jeu légèrement négatif. Un bon moyen d'augmenter alors la souplesse des angles consiste à y ménager des entailles longitudinales 73 qui affaiblissent sa résistance (figure 9).

D'autre part, afin de diminuer les pertes de charge hydraulique par frottement, il est possible de diminuer la hauteur des cellules tout en conservant une longueur de guidage suffisante des éléments combustibles. Pour cela on assemble, au moyen d'une bordure 76 périphérique de largeur suffisante, préférentiellement deux grilles superposées de cellules de hauteur réduite $G_1$ et $G_2$ conformes chacune à une des réalisations décrites plus haut (figure 10). L'ensemble, dont la hauteur résulte de la hauteur de la bordure périphérique 76, constitue la grille 77. L'existence des deux grilles espacées perturbe la régularité de l'écoulement du réfrigérant lors de son passage au niveau des grilles : la fonction "mélangeuse" est ainsi obtenue. Les cellules peuvent être de section carrée ou triangulaire. La bordure 76 est pourvue, comme la précédente bordure 65, d'échancrures et d'évidements par lesquels on positionne les grilles $G_1$ et $G_2$, et qui portent les mêmes numéros de référence.

Si ce brassage est insuffisant, il est possible de profiler en ailettes 19, 39, 49, 59 l'extrémité des tronçons de cylindre en dehors des échancrures afin de perturber davantage l'écoulement. Le nombre des ailettes est à optimiser suivant les caractéristiques du réseau de crayons, la distribution de puissance et les conditions thermohydrauliques environnantes afin d'éviter l'apparition de film de vapeur.

**Revendications**

1. Grille (22,60) d'assemblage de crayons de combustible constituée de tronçons de cylindre (11, 13; 31; 41; 51) échancrés et/ou évidés sur une partie de leur hauteur et assemblés de façon que leurs sections se chevauchent partiellement, caractérisée en ce que les tronçons ont une section polygonale à nombre fini de côtés, les côtés (21) étant reliés par des méplats (16; 36; 46; 56) sur lesquels s'appuient les crayons, les échancrures (12; 32, 33; 42, 43; 52, 53) et les évidements (37; 47; 57) étant pénétrés par des portions saillantes (15; 35; 45; 55) de tronçons voisins consistant en deux côtés consécutifs et un méplat et s'étendant sur toute la largeur comprise entre lesdits côtés consécutifs.

2. Grille suivant la revendication 1, caractérisée en ce que le polygone est un carré.

3. Grille suivant la revendication 1, caractérisée en ce que le polygone est un triangle.

4. Grille suivant l'une quelconque des revendications 1 à 3, caractérisée en ce qu'elle comprend en outre une bordure (65) enserrant les tronçons (11, 13; 31; 41; 51) et pourvue d'échancrures et/ou d'évidements pénétrés par des portions saillantes de tronçons voisins et de portions saillantes à méplats utilisées comme appuis des crayons (1) contenus dans les tronçons de cylindre périphériques, chaque évidement et/ou échancrure de la bordure étant associé à une portion saillante de la bordure suivant une relation de superposition.

5. Grille suivant l'une quelconque des revendications 1 à 4, caractérisée en ce que des extrémités des tronçons de cylindre, en dehors des échancrures, sont profilées en ailettes (19; 39; 49; 59) afin de perturber l'écoulement d'un fluide passant par la grille.

6. Grille suivant l'une quelconque des revendications 1 à 5, caractérisée en ce que les tronçons de cylindre comprennent des entailles longitudinales (73) sur les parties saillantes des tronçons (15; 35; 45; 55) pénétrant dans les échancrures ou les évidements.

7. Structure d'assemblage (77) de crayons de combustible, caractérisée en ce qu'elle comporte deux grilles (G1, G2) conformes à l'une quelconque des revendications 1 à 6 et réunis par une bordure (76) enserrant les tronçons et pourvue d'échancrures et/ou d'évidements pénétrés par des portions saillantes de tronçons voisins et de portions saillantes à méplats utilisées comme appuis des crayons (1) contenus dans les tronçons de cylindre périphériques, chaque évidement et/ou échancrure de la bordure étant associé à une portion saillante de la bordure suivant une relation de superposition.

8. Structure d'assemblage de crayons de combustible, caractérisée en ce qu'elle comporte au moins trois grilles (101) conformes à l'une quelconque des revendications 1 à 6 et réunies par des tubes-guides (102).

**Patentansprüche**

1. Brennstabbündel-Haltegitter (22, 60), das aus zylinderstümpfen (11, 13; 31, 41, 51) besteht, die auf einen Teil ihrer Höhe ausgeschnitten und/oder hohl sind und so angeordnet sind, daß sich ihre Querschnitte teilweise überlappen, dadurch gekennzeichnet, daß die Stümpfe einer. polygonalen Querschnitt mit einer endlichen Seitenzahl besitzen, wobei die Seiten (21) über Anflachungen (16; 36; 46; 56) verbunden sind, auf die sich die Stäbe stützen, wobei die Ausschnitte (12; 32, 33; 42, 43; 52, 53) und die Hohlräume (37, 47; 57) von vorstehenden Teilen (15; 35; 45; 55) der benachbarten Stümpfe, die aus zwei aufeinander folgenden Seiten und einer Abflachung bestehen und sich über die gesamte Breite zwischen den beiden aufeinander folgenden Seiten erstrecken, durchdrungen werden.

2. Gitter nach Anspruch 1, dadurch gekennzeichnet, daß das Polygon ein Quadrat ist.

3. Gitter nach Anspruch 1, dadurch gekennzeichnet, daß das Polygon ein Dreieck ist.

4. Gitter nach einem der Ansprüche 1 bis 3, dadurch gekennzeichnet, daß es außerdem einen rand (65) aufweist, der die Stümpfe (11, 13; 31; 41; 51) umrahmt und mit Ausschnitten und/oder Hohlräumen versehen ist, die von vorstehenden Teilen der benachbarten Stümpfe und von vorstehenden, abgeflachten Teilen, die als Stütze der in den peripheren Zylinderstümpfen enthaltenen Stäbe (1) verwendet werden, durchdrungen werden, wobei jeder Hohlraum und/oder Ausschnitt des randes mit einem vorstehenden Teil des folgenden randes entsprechend einer Überlagerungsverbindung verbunden ist.

5. Gitter nach einem der Ansprüche 1 bis 4, dadurch gekennzeichnet, daß die Zylinderstümpfe außerhalb der Ausschnitte in Flügelform (19; 39; 49; 59) profiliert sind, um den Abfluß einer durch das Gitter fließenden Flüssigkeit zu stören.

6. Gitter nach einem der Ansprüche 1 bis 5, dadurch gekennzeichnet, daß die zylinderstümpfe longitudinale Einkerbungen (73) in den vorstehenden Teilen der Stümpfe (15; 35; 45; 55), die in die Ausschnitte oder die Hohlräume eindringen, besitzt.

7. Brennstabbündel-Haltestruktur (77), dadurch gekennzeichnet, daß sie zwei Gitter (G1, G2) nach einem der Ansprüche 1 bis 6 umfaßt, die mit einem Rand (76) umgeben sind, der die Stümpfe umrahmt und mit Ausschnitten und/oder Hohlräumen versehen ist, die von vorstehenden Teilen der benachbarten Stümpfe und von vorstehenden, abgeflachten Teilen, die als Stütze der In den peripheren Zylinderstümpfen enthaltenen Stäbe (1) verwendet werden, durchdrungen werden, wobei jeder Hohlraum und/oder Ausschnitt des Randes mit einem vorstehenden Teil des folgenden Randes entsprechend einer Überlagerungsverbindung verbunden ist.

8. Brennstabbündel-HaltestrukturBrennstabbündel-Hal-testruktur (77), dadurch gekennzeichnet, daß sie wenigstens drei Gitter nach einem der Ansprüche 1 bis 6 umfaßt, die durch Röhrenführungen (102) miteinander verbunden sind.

**Claims**

1. Grid (22, 60) for the assembly of fuel rods constituted by cylinder portions (11, 13, 31, 41, 51), which are cut out and/or recessed over part of their height and assembled in such a way that their sections partly overlap, characterized in that the portions have a polygonal section with a finite number of sides, the sides (21) being connected by flats (16, 36, 46, 56) on which bear the rods, the cut-outs (12, 32, 33, 42, 43, 52, 53) and the recesses (37, 47, 57) being penetrated by projecting portions (15, 35, 45, 55) of adjacent sections consisting of two consecutive sides and a flat and extending over the entire width between said consecutive sides.

2. Grid according to claim 1, characterized in that the polygon is a square.

3. Grid according to claim 1, characterized in that the polygon is a triangle

4. Grid according to any one of the claims 1 to 3, characterized in that it also comprises an edging (65) surrounding the sections (11, 13, 31, 41, 51) and provided with cut-outs and/or recesses penetrated by projecting portions of adjacent sections and projecting portions with flats used as bearing surfaces for the rods (1) contained in the peripheral cylindrical sections, each recess and/or cut-out of the edging being associated with a projecting portion of the latter in accordance with a superimposing relationship.

5. Grid according to any one of the claims 1 to 4, characterized in that the ends of the cylinder sections, outside the cut-outs, are profiled as fins (19, 49, 59,) in order to disturb the flow of a fluid passing through the grid.

6. Grid according to any one of the claims 1 to 5, characterized in that the cylinder sections comprise longitudinal notches (73) on the projecting portions of the sections (15, 35, 45, 55) penetrating the cut-outs or recesses.

7. Fuel rod assembly structure (77), characterized in that it incorporates two grids ($G_1$, $G_2$) in accordance with any one of the claims 1 to 6 and joined by an edging (76) surrounding the sections and provided with cut-outs and/or recesses penetrated by projecting portions of adjacent sections and projecting portions with flats used as bearing surfaces for the rods (1) contained in the peripheral cylindrical sections, each recess and/or cut-out of the edging being associated with a projecting portion of the latter in accordance with a superimposing relationship.

8. Fuel rod assembly structure, characterized in that it incorporates at least three grids (101) according to any one of the claims 1 to 6 and joined by guide tubes (102).

# FIG. 1

FIG. 3

FIG. 2

FIG 9

8

FIG. 6

FIG. 5

FIG. 4

# FIG. 7

# FIG. 8

# FIG. 10